# EUROPÄISCHE PATENTSCHRIFT

(11) **EP 3 334 947 B1**
(45) Veröffentlichungstag und Bekanntmachung des Hinweises auf die Patenterteilung: **12.05.2021**
(21) Anmeldenummer: 16734270.8
(22) Anmeldetag: 28.06.2016
(51) Int. Cl.: F16B 41/00, F16B 5/02, F16B 11/00

(54) **ANORDNUNG UND VERFAHREN ZUR SICHERUNG EINES BEFESTIGUNGSELEMENTES**
ASSEMBLY AND METHOD FOR SECURING A FASTENING ELEMENT
ENSEMBLE ET PROCÉDÉ POUR BLOQUER UN ÉLÉMENT DE FIXATION

(30) Priorität: 12.08.2015 DE 102015113288
(43) Veröffentlichungstag der Anmeldung: 20.06.2018
(73) Patentinhaber: Volkswagen AG, 38440 Wolfsburg (DE); Böllhoff Verbindungstechnik GmbH, 33649 Bielefeld (DE)
(72) Erfinder: HÜBNER, Torsten, 38444 Wolfsburg (DE); JODELEIT, Martin, 33617 Bielefeld (DE); KAHRE, Michael, 32052 Herford (DE); STEFFENFAUSEWEH, Sandra, 33415 Verl (DE)
(74) Vertreter: Gulde & Partner
(86) Internationale Anmeldenummer: PCT/EP2016/065010
(87) Internationale Veröffentlichungsnummer: WO 2017/025240

(56) Entgegenhaltungen:
- DE-A1-102006 005 107
- US-A- 2 761 484

## Beschreibung

Die Erfindung betrifft eine Anordnung und Verfahren zur Sicherung eines Befestigungselementes an einem ersten Bauteil mit den im Oberbegriff des Anspruchs 1 genannten Merkmalen.

Anordnungen der gattungsgemäßen Art sind bekannt. Diese werden auch als Verliersicherungen bezeichnet und umfassen beispielsweise Sicherungsscheiben, Sicherungsringe oder dergleichen. Mit derartigen Anordnungen soll vermieden werden, dass Befestigungselemente, beispielsweise Schrauben, beim Trennen von zwei mit dem Befestigungselement verbundenen Bauteilen verloren gehen. Die Verliersicherungen halten das Befestigungselement an einem der Bauteile, so dass dieses für ein erneutes Verbinden der beiden Bauteile zur Verfügung steht.

Die DE 10 2010 052 195 offenbart eine Schraubeneinheit. Der Schraubeneinheit liegt die Aufgabe zugrunde, einen einfachen Aufbau aufzuweisen und die Montage zu erleichtern. Die Schrift lehrt dazu, eine Schraube mit einer Nut zu verwenden. Eine Federscheibe kann beim Ein- und Ausschrauben in diese Nut treten, so dass die Schraube an eine Verkleidung geklemmt ist, denn die Verkleidung lagert die Federscheibe.

Die DE 10 2007 008 372 offenbart eine Montageeinheit. Darin wird ein Montageteil mit einem Befestiger verliersicher verbunden. Dazu weist der Befestiger ein Sicherungselement auf, das ein Halteelement hintergreift. Dafür ist der Außendurchmesser des Sicherungselements größer ausgeführt als der Innendurchmesser des Haltelements.

Die EP 0 532 392 A1 offenbart ein Führungsgerät. Das Gerät weist eine bewegliche und eine unbewegliche Einheit auf, die mittels einer Schraube miteinander verschraubt werden können. Damit die Schraube nicht verloren gehen kann, ist in ihrer Mitte eine Hülse angebracht. Diese Hülse wandert beim Ein- und Ausschrauben mit. Da die bewegliche Einheit aber einen Befestigungsdorn aufweist, läuft die Hülse der Schraube dort auf einen Sitz hinein. Der Sitz der Hülse im Dorn verhindert ein weiteres Ausschrauben der Schraube. Damit kann sie nicht verloren gehen.

US 2 761 484 A offenbart eine Anordnung zur Sicherung eines Befestigungselementes an einem ersten Bauteil. Das Bauteil besitzt eine Durchgangsöffnung für einen Schafft des Befestigungselementes. Ein Sicherungselement umgreift den Schafft des Befestigungselementes. Ein Kopfteil des Befestigungselementes und das Sicherungselement sind an gegenüberliegenden Seiten des Bauteiles angeordnet. Der Schafft des Befestigungselementes greift in eine Aufnahme eines zweiten Bauteiles zur kraft- und/oder formschlüssigen Verbindung ein.

Bei dem bekannten Stand der Technik ist nachteilig, dass das Sicherungselement bei einer erstmaligen Montage zweier Bauteile mittels eines Befestigungselementes immer in einem zusätzlichen Montageschritt mit zu berücksichtigen ist.

Der Erfindung liegt nun die Aufgabe zugrunde, eine Anordnung und ein Verfahren zur Sicherung eines Befestigungselementes an einem ersten Bauteil zu schaffen, bei der in einfacher Weise eine Verliersicherung für ein Befestigungselement realisiert ist.

Erfindungsgemäß wird die Aufgabe durch eine Anordnung mit den in Anspruch 1 genannten Merkmalen gelöst. Dadurch, dass das Sicherungselement vor einem ersten Verbinden eines ersten Bauteiles mit einem zweiten Bauteil an dem zweiten Bauteil vorfixiert ist, ist vorteilhaft möglich, dass während eines Montierens, dass heißt Verbinden der Bauteile, lediglich das Befestigungselement durch eine Durchgangsöffnung des ersten Bauteiles geführt werden muss und mit seinem Schaft in einen Befestigungsabschnitt des zweiten Bauteiles eingreift und hierbei gleichzeitig das Sicherungselement durchgreift. Eine Positionierung des Sicherungselementes erfolgt somit nicht durch einen zusätzlichen Montageschritt, sondern durch Bereitstellen des zweiten Bauteiles. Insbesondere bei einer automatisierten Montage, beispielsweise beim Komplettieren eines Kraftfahrzeuges, kann somit auf den Montageschritt Bereitstellen und Positionieren eines Sicherungselementes verzichtet werden, da dieses bereits am zweiten Bauteil vorfixiert ist. Nach einem erstmaligen Demontieren der Bauteile wird das Sicherungselement von dem zweiten Bauteil gelöst und verbleibt am Schaft des Befestigungselementes, so dass das Befestigungselement unverlierbar in der Durchgangsöffnung des ersten Bauteiles gehalten ist.

In bevorzugter Ausgestaltung der Erfindung ist vorgesehen, dass der Schaft des Befestigungselementes eine Barriere zum Hintergreifen des Sicherungselementes beim erstmaligen Verbinden des ersten Bauteiles mit dem zweiten Bauteil aufweist, wobei die Barriere vorzugsweise ein Widerhaken oder eine am Umfang zunehmende Gewindeflanke einer als Schraube ausgebildeten Befestigungselementes ist. Hierdurch wird in einfacher Weise möglich, dass Befestigungselement, hier insbesondere den Schaft des Befestigungselementes mit dem Sicherungselement in formschlüssigen Eingriff zu bringen, so dass beim Lösen des Befestigungselementes der Schaft das Sicherungselement von dem zweiten Bauelement trennt und dass dieses Element hinter der Barriere am Befestigungselement verbleibt.

Im weiter bevorzugter Ausgestaltung ist vorgesehen, dass das Sicherungselement aus einem elastischen Werkstoff, vorzugsweise aus Gummi, ausgebildet ist. Da elastische Werkstoffe relativ leicht verformbar sind, eignen sie sich besonders gut, für die Ausbildung der Sicherungselemente, da das Befestigungselement mit seinem Schaft und der daran angeordneten Barriere so durch eine Durchgangsöffnung des Sicherungselementes hindurchgesteckt werden können und die Barriere das Sicherungselement hintergreift.

In weiterer bevorzugter Ausgestaltung der Erfindung ist vorgesehen, dass das Sicherungselement eine Scheibe oder eine Kappe ist. Derartig ausgestaltete Sicherungselemente lassen sich in besonders einfacher Weise an dem zweiten Bauteil vorfixieren. Insbesondere kann eine Vorfixierung des Sicherungselementes am zweiten Bauteil mit einer Haltekraft erfolgen, die relativ gering ist, so dass ein Entfernen der Sicherungsscheibe durch die Barriere des Befestigungselementes beim erstmaligen Trennen der beiden Bauteile ohne weiteres möglich ist.

Ferner ist in bevorzugter Ausgestaltung der Erfindung vorgesehen, dass das erste Bauteil einen Teil einer Kraftfahrzeugkarosserie und das zweite Bauteil ein an der Kraftfahrzeugkarosserie zu befestigendes Ausstattungselement, insbesondere eine Kraftfahrzeugbeleuchtungsvorrichtung, beispielsweise eine Leuchte oder ein Scheinwerfer, ist. Somit lässt sich in einem automatisierten Montageprozess die Kraftfahrzeugbeleuchtungsvorrichtung in einfacher Weise durch ein Befestigungselement an der Kraftfahrzeugkarosserie zumindest vorpositionieren. Soll das Ausstattungselement, insbesondere die Kraftfahrzeugleuchte demontiert werden, kann dies durch Lösen des Befestigungselementes erfolgen, wobei hierbei das Sicherungselement an dem Schaft des Befestigungselements verbleibt.

Ein Verlieren des Befestigungselementes ist somit nicht möglich.

Erfindungsgemäß wird die Aufgabe ferner durch ein Verfahren mit den in Anspruch 11 genannten Merkmalen gelöst. Dadurch, dass das Sicherungselement vor einem erstmaligen Verbinden eines ersten Bauteils mit einem zweiten Bauteil an dem zweiten Bauteil vorfixiert wird, der Schaft eines Befestigungselementes beim Verbinden der beiden Bauteile das Sicherungselement mit einer Barriere hintergreift und nach einem erstmaligen Lösen der beiden Bauteile das Sicherungselement vom zweiten Bauteil getrennt wird und am Schaft des Befestigungselementes verbleibt, ist vorteilhaft möglich, das Sicherungselement ohne einen zusätzlichen Montageschritt während des erstmaligen Verbindens der beiden Bauteile zu Positionieren. Durch die Vorfixierung des Sicherungselementes am zweiten Bauteil ist eine lagegenaue Positionierung des Sicherungselementes möglich, so dass während eines Montageschrittes des Verbindens der beiden Bauteile, das Sicherungselement exakt an seinen bestimmungsgemäßen Montageort gelangt.

In bevorzugter Ausgestaltung der Erfindung ist vorgesehen, dass das Sicherungselement am zweiten Bauteil durch Kleben oder Klemmen vorfixiert wird. Hierdurch wird möglich, das Sicherungselement in einfacher Weise an seinem gewünschten Ort vorzufixieren.

Weitere bevorzugte Ausgestaltungen der Erfindung ergeben sich aus den übrigen, in den Unteransprüchen genannten Merkmalen.

Die Erfindung wird nachfolgend in Ausführungsbeispielen anhand der zugehörigen Zeichnungen näher erläutert. Es zeigen:
- Figur 1: eine schematische Darstellung der erfindungsgemäßen Anordnung zur Sicherung eines Befestigungselementes und
- Figur 2: die erfindungsgemäße Anordnung in verschiedenen Montageschritten.

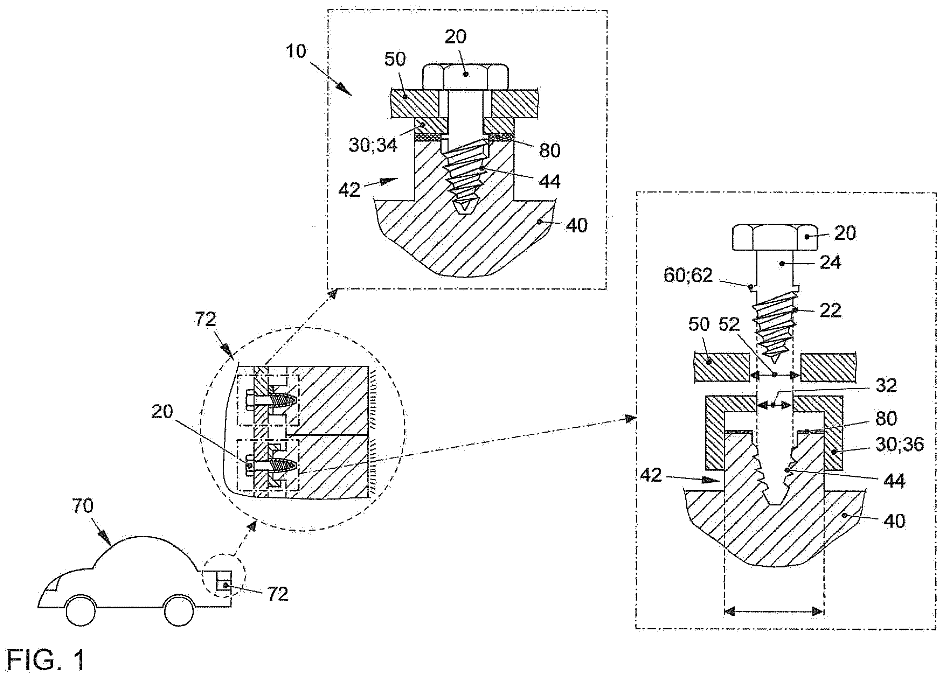

In Figur 1 ist zunächst schematisch ein Fahrzeug 70 dargestellt, das bekannter Weise verschiedene Kraftfahrzeugbeleuchtungsvorrichtungen, wie beispielsweise Scheinwerfer oder Heckleuchten, umfasst. Zur Erläuterung des Ausführungsbeispiels wird nachfolgend auf eine Kraftfahrzeugbeleuchtungsvorrichtung 72 an einem Heck des Fahrzeugs 70 Bezug genommen. Die Kraftfahrzeugbeleuchtungsvorrichtung 72 wird während der Endmontage des Fahrzeuges 70 an einer Fahrzeugkarosserie fixiert. Hierzu dient wenigstens ein Befestigungselement 20, das gemäß dem dargestellten Ausführungsbeispiel als Schraube ausgebildet ist. Nachfolgend wird der Begriff Befestigungselement somit durch den Begriff Schraube 20 definiert. Es ist natürlich klar, dass anstelle der Schraube auch ein anderes Befestigungselement mittels dem die erfindungsgemäße Anordnung zur Sicherung der Befestigungselemente erfolgen kann, umfasst ist.

In den vergrößerten Darstellungen in Figur 1 ist die erfindungsgemäße Anordnung verdeutlicht.

Die Anordnung umfasst mindestens eine Schraube 20 mit einem Außengewinde 22, mindestens ein Sicherungselement 30 mit einem Durchlass 32, ein erstes Bauteil 50 mit einer Durchgangsöffnung 52 sowie mindestens ein zweites Bauteil 40 mit einem Innengewinde 44.

Mittels der Schraube 20 soll das zweite Bauteil 40 mit dem ersten Bauteil 50 kraftschlüssig verbunden werden.

Das erste Bauteil 50 ist hier ein Träger der Fahrzeugkarosserie. Bei dem Träger 50 handelt es sich in einer bevorzugten Ausführungsform um ein Blech, das Teil einer Fahrzeugkarosserie des Fahrzeuges 70 sein kann. Bei dem zweiten Bauteil 40 handelt es sich um ein Teil eines Gehäuses der Kraftfahrzeugbeleuchtungsvorrichtung 72.

Die Schraube 20 durchgreift die Durchgangsöffnung 52 des Trägers 50 und den Durchlass 32 des Sicherungselementes 30. Die Schraube 20 besitzt einen Schaft 24, der mit einem Außengewinde 22 versehen ist.

In dem Bauteil 40 befindet sich ein integriertes Insert 42, das ein Innengewinde 44 aufweist. Außengewinde 22 der Schraube 20 und Innengewinde 44 des Inserts 42 korrespondieren miteinander, so dass die Schraube 20 in das Insert 42 eingeschraubt werden kann. Hierdurch wird das Bauteil 40 mit dem Träger 50 kraftschlüssig verbunden.

Das Insert 42 kann form-, kraft- oder stoffschlüssig mit dem Bauteil 40 verbunden sein. Nach einer weiteren Ausführungsvariante kann das Innengewinde 44 auch direkt in eine Wandung des Gehäuses 40 der Kraftfahrzeugbeleuchtungsvorrichtung 72 vorgesehen sein.

Das Sicherungselement 30 ist auf dem Bauteil 40 so angeordnet, dass der Durchlass 32 mit den das Innengewinde 44 aufweisende Vertiefung des Bauteils 40 beziehungsweise Inserts 42 korrespondiert. Das Sicherungselement 30 kann hierbei als Scheibe 34 oder als Kappe 36 ausgebildet sein. Das Sicherungselement 30 ist mit dem Bauteil 40 über einen Haftvermittler, beispielsweise eine Klebstoffschicht 80 verbunden. Somit hat das Sicherungselement 30 eine definierte Position am Bauteil 40.

Im Falle der Ausbildung des Sicherungselementes 30 als Kappe 36 kann auf die Ausbildung der Klebstoffschicht 80 verzichtet werden. Hierbei wird die Kappe 36 so ausgebildet, dass sie mit ihrem umlaufenden Kragen eine entsprechende Formausbildung des Bauteils 40 beziehungsweise des Inserts 42 klemmend umgreift. Nach einem nicht dargestellten Ausführungsbeispiel kann der Kragen der Kappe 36 auch in eine entsprechende Ausnehmung des Inserts 42 eingreifen.

Der Schaft 24 der Schraube 20 besitzt ferner einen, als Barriere 60 ausgebildeten Widerhaken 62. Der Widerhaken 62 wird hierbei von einer radial um den Schaft 24 umlaufenden ringförmigen Kragen gebildet. Ein Außendurchmesser der Barriere 60 ist hierbei so bemessen, dass dieser kleiner oder gleich dem der Durchlassöffnung 52 im Bauteil 50 ist. Der Außendurchmesser der Barriere 60 ist jedoch größer als der Durchmesser des Durchlasses 32 des Sicherungselementes 30.

Anhand der in Figur 1 schematisch gezeigten Anordnung wird deutlich, dass das Sicherungselement 30 vor einem ersten Verbinden der Bauteile 40 und 50 an dem Bauteil 40, gemäß dem Ausführungsbeispiel an der Kraftfahrzeugbeleuchtungsvorrichtung 72, angeordnet ist. Bei einem Montageschritt ist somit das Sicherungselement 30 bereits in einer vorfixierten Position in Bezug auf das Befestigungselement, also die Schraube 20.

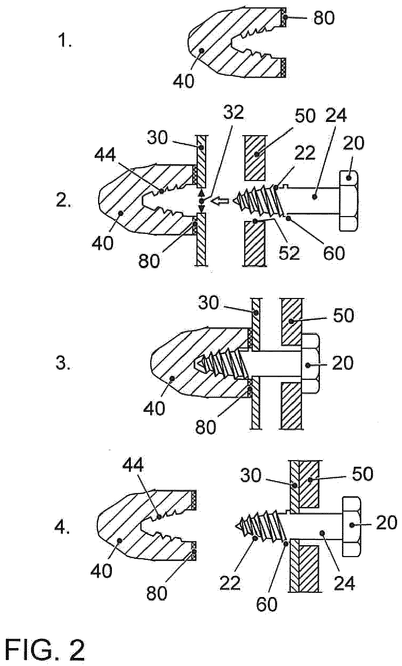

Anhand der Figur 2 wird die Funktion der erfindungsgemäßen Anordnung zur Sicherung eines Befestigungselementes verdeutlicht. In der Figur 2 ist eine Abfolge von Montageschritten bei einem erstmaligen Verbinden der Bauteile 50 und 40 miteinander und einem erstmaligen Lösen dieser Verbindung dargestellt.

In Figur 2 sind in der Darstellung von oben nach unten die Abfolge von Verfahrensschritten dargestellt.

In einem ersten Verfahrensschritt wird an das Bauteil 40 die Klebstoffschicht 80 aufgebracht. Auf diese wird dann, wie der Verfahrensschritt 2 verdeutlicht, das Sicherungselement 30 mit dem Bauteil 40 vorfixiert. Das Bauteil 40 wird mit dem Bauteil 50 so positioniert, dass die Schraube 20 mit ihrem Schaft 24 sowohl die Durchlassöffnung 52, als auch den Durchlass 32 passieren kann.

In einem dritten Montageschritt wird das Außengewinde 22 der Schraube 20 in das Innengewinde 44 des Bauteils 40 verschraubt. Hierbei passiert sowohl das Außengewinde 22 als auch die Barriere 60 den Durchlass 32 des Sicherungselementes 30. Das Sicherungselement 30 besteht vorzugsweise aus einem elastischen Material, beispielsweise Gummi. Das Sicherungselement 30 kann auch aus Kunststoff bestehen. Hierdurch gibt das Sicherungselement 30 im Bereich des Durchlasses 32 nach, so dass die Barriere 60 den Durchlass 32 passieren kann. Durch Aufbringen einer Schraubkraft auf den Kopf der Schraube 20 erfolgt somit eine kraftschlüssige Verbindung zwischen den Bauteilen 40 und 50.

Soll diese Verbindung zwischen den Bauteilen 40 und 50 wieder gelöst werden, wird die Schraube 20 mit ihrem Außengewinde 22 aus dem Innengewinde 44 herausgeschraubt. Hierbei gelangt die Barriere 60 in Anlagekontakt mit dem Sicherungselement 30. Die durch die Barriere 60 auf das Sicherungselement 30 aufgebrachte Kraft ist hierbei größer als die Haftkraft zwischen dem Sicherungselement 30 und dem Bauteil 40 über die Klebstoffschicht 80. Das Sicherungselement 30 reißt damit von der Klebstoffschicht 80 und somit vom Bauteil 40 ab und verbleibt am Schaft 24 der Schraube 20. Das Sicherungselement 30 stellt somit eine Verliersicherung für die Schraube 20 am Bauteil 50 dar. Die Schraube 20 kann also bei der Demontage der Bauteile 40 und 50 nicht verloren gehen und steht bei einer erneuten Montage des Bauteils 40 oder eines anderen Bauteils 40 unmittelbar wieder zur Verfügung.

### Bezugszeichenliste

- 20: Befestigungselement/ Schraube
- 22: Außengewinde
- 24: Schaft
- 30: Sicherungselement
- 32: Durchlass
- 34: Scheibe
- 36: Kappe
- 40: zweites Bauteil/ zu befestigendes Ausstattungselement/ Kraftfahrzeugbeleuchtungsvorrichtung
- 42: Inserts
- 44: Innengewinde
- 50: erstes Bauteil/ Träger
- 52: Durchgangsöffnung
- 60: Barriere
- 62: Widerhaken
- 70: Fahrzeug
- 72: Kraftfahrzeugbeleuchtungsvorrichtung
- 80: Klebstoffschicht

## Patentansprüche

1. Anordnung zur Sicherung eines Befestigungselementes (20) an einem ersten Bauteil (50), wobei das erste Bauteil (50) eine Durchgangsöffnung (52) für einen Schaft (24) des Befestigungselementes (20) aufweist, mit einem Sicherungselement (30), das den Schaft (24) des Befestigungselementes (20) umgreift, wobei ein Kopfteil des Befestigungselementes (20) und das Sicherungselement (30) an den gegenüberliegenden Seiten des ersten Bauteiles (50) angeordnet sind und der Schaft (24) des Befestigungselementes (20) in einer Aufnahme eines zweiten Bauteiles (40) zur kraft- und/oder formschlüssigen Verbindung der beiden Bauteile (40,50) eingreift, **dadurch gekennzeichnet, dass** das Sicherungselement (30) vor einem ersten Verbinden des ersten Bauteiles (50) mit dem zweiten Bauteil (40) an dem zweiten Bauteil (40) vorfixiert ist.

2. Anordnung nach Anspruch 1, **dadurch gekennzeichnet, dass** der Schaft (24) des Befestigungselementes (20) zum Hintergreifen des Sicherungselementes (30) beim erstmaligen Verbinden des ersten Bauteiles (50) mit dem zweiten Bauteil (40) eine Barriere (60) aufweist.

3. Anordnung nach Anspruch 2, **dadurch gekennzeichnet, dass** die Barriere (60) ein Widerhaken (62) ist.

4. Anordnung nach Anspruch 2, **dadurch gekennzeichnet, dass** die Barriere (60) eine im Umfang zunehmende Gewindeflanke ist.

5. Anordnung nach einem der vorhergehenden Ansprüche, **dadurch gekennzeichnet, dass** das Sicherungselement (30) aus einem elastischen Werkstoff ausgebildet ist.

6. Anordnung nach einem der vorhergehenden Ansprüche, **dadurch gekennzeichnet, dass** das Sicherungselement (30) eine Scheibe (34) ist.

7. Anordnung nach einem der vorhergehenden Ansprüche, **dadurch gekennzeichnet, dass** das Sicherungselement (30) eine Kappe (36) ist.

8. Anordnung nach einem der vorhergehenden Ansprüche, **dadurch gekennzeichnet, dass** das erste Bauteil (50) ein Teil einer Kraftfahrzeugkarosserie ist.

9. Anordnung nach einem der vorhergehenden Ansprüche, **dadurch gekennzeichnet, dass** das zweite Bauteil (40) ein an der Kraftfahrzeugkarosserie zu befestigendes Ausstattungselement ist.

10. Anordnung nach Anspruch 9, **dadurch gekennzeichnet, dass** das Ausstattungselement eine Kraftfahrzeugbeleuchtungsvorrichtung (72) ist.

11. Verfahren zum Sichern eines Befestigungselementes (20) an einem ersten Bauteil (50) mittels eines über einen Schaft (24) des Befestigungselementes (20) anordbaren Sicherungselement (30), so dass ein Kopfteil des Befestigungselementes (20) und das Sicherungselement (30) an gegenüberliegenden Seiten des ersten Bauteiles (50) angeordnet werden, **dadurch gekennzeichnet, dass** das Sicherungselement (30) vor einem erstmaligen Verbinden des ersten Bauteiles (50) mit einem zweiten Bauteil (40) an dem zweiten Bauteil (40) vorfixiert wird, der Schaft (24) des Befestigungselementes (20) beim Verbinden der beiden Bauteile (50, 40) das Sicherungselement (30) mit einer Barriere (60) hintergreift und nach einem erstmaligen Lösen der beiden Bauteile (50, 40) das Sicherungselement (30) vom zweiten Bauteil (40) getrennt wird und am Schaft (24) des Befestigungselementes (20) verbleibt.

12. Verfahren nach Anspruch 11, **dadurch gekennzeichnet, dass** das Sicherungselement (30) am zweiten Bauteil (40) durch Kleben oder Klemmen vorfixiert wird.

## Claims

1. An assembly for securing a fastening element (20) to a first component (50), wherein the first component (50) has a through-opening (52) for a shaft (24) of the fastening element (20), with a securing element (30) which surrounds the shaft (24) of the fastening element (20), wherein a head part of the fastening element (20) and the securing element (30) are arranged on opposite sides of the first component (50), and the shaft (24) of the fastening element (20) engages in a receptacle of a second component (40) for non-positive and/or positive connection of the two components (40, 50), **characterized in that** the securing element (30) is pre-fixed on the second component (40) before the first component (50) is connected to the second component (40) for the first time.

2. The assembly according to claim 1, **characterized in that** the shaft (24) of the fastening element (20) has a barrier (60) for engaging behind the securing element (30) upon the first component (50) being connected for the first time to the second component (40).

3. The assembly according to claim 2, **characterized in that** the barrier (60) is a barb (62).

4. The assembly according to claim 2, **characterized in that** the barrier (60) is a circumferentially increasing thread flank.

5. The assembly according to any one of the preceding claims, **characterized in that** the securing element (30) is made of an elastic material.

6. The assembly according to any one of the preceding claims, **characterized in that** the securing element (30) is a washer (34).

7. The assembly according to any one of the preceding claims, **characterized in that** the securing element (30) is a cap (36).

8. The assembly according to any one of the preceding claims, **characterized in that** the first component (50) is a part of a motor vehicle body.

9. The assembly according to any one of the preceding claims, **characterized in that** the second component (40) is an equipment element to be fastened to the vehicle body.

10. The assembly according to claim 9, **characterized in that** the equipment element is a motor vehicle lighting device (72).

11. A method for securing a fastening element (20) to a first component (50) by means of a securing element (30) which can be arranged over a shaft (24) of the fastening element (20), so that a head part of the fastening element (20) and the securing element (30) are arranged on opposite sides of the first component (50), **characterized in that** the securing element (30) is pre-fixed on the second component (40) before the first component (50) is connected to the second component (40) for the first time; the shaft (24) of the fastening element (20) engages behind the securing element (30) with a barrier (60) if the two components (50, 40) are connected; and, after the two components (50, 40) are detached for the first time, the securing element (30) is separated from the second component (40) and remains on the shaft (24) of the fastening element (20).

12. The method according to claim 11, **characterized in that** the securing element (30) is pre-fixed on the second component (40) by gluing or clamping.

## Revendications

1. Ensemble pour bloquer un élément de fixation (20) sur un premier composant (50), dans lequel le premier composant (50) présente un orifice de passage (52) pour une tige (24) de l'élément de fixation (20), comprenant un élément de blocage (30), qui entoure la tige (24) de l'élément de fixation (20), dans lequel une partie tête de l'élément de fixation (20) et l'élément de blocage (30) sont agencés sur les faces opposées du premier composant (50) et la tige (24) de l'élément de fixation (20) vient en prise dans un logement d'un second composant (40) aux fins d'une liaison à force et/ou par coopération de formes des deux composants (40, 50), **caractérisé en ce que** l'élément de blocage (30) est fixé au préalable sur le second composant (40) avant que le premier composant (50) ne soit relié pour la première fois au second composant (40).

2. Ensemble selon la revendication 1, **caractérisé en ce que** la tige (24) de l'élément de fixation (20) présente une barrière (60) pour venir en prise derrière l'élément de blocage (30) lors de la première liaison du premier composant (50) au second composant (40).

3. Ensemble selon la revendication 2, **caractérisé en ce que** la barrière (60) comprend un crochet de retenue (62).

4. Ensemble selon la revendication 2, **caractérisé en ce que** la barrière (60) est un flan de filetage croissant sur la périphérie.

5. Ensemble selon l'une quelconque des revendications précédentes, **caractérisé en ce que** l'élément de blocage (30) est conçu à partir d'un matériau élastique.

6. Ensemble selon l'une quelconque des revendications précédentes, **caractérisé en ce que** l'élément de blocage (30) est un disque (34).

7. Ensemble selon l'une quelconque des revendications précédentes, **caractérisé en ce que** l'élément de blocage (30) est un couvercle (36).

8. Ensemble selon l'une quelconque des revendications précédentes, **caractérisé en ce que** le premier composant (50) est une partie d'une carrosserie de véhicule automobile.

9. Ensemble selon l'une quelconque des revendications précédentes, **caractérisé en ce que** le second composant (40) est un élément d'équipement à fixer sur la carrosserie de véhicule automobile.

10. Ensemble selon la revendication 9, **caractérisé en ce que** l'élément d'équipement est un dispositif d'éclairage de véhicule automobile (72).

11. Procédé de blocage d'un élément de fixation (20) sur un premier composant (50) au moyen d'un élément de blocage (30) pouvant être disposé sur une tige (24) de l'élément de fixation (20), de sorte qu'une partie tête de l'élément de fixation (20) et l'élément de blocage (30) soient agencés sur des faces opposées du premier composant (50), **caractérisé en ce que** l'élément de blocage (30) est fixé au préalable sur le second composant (40) avant que le premier composant (50) ne soit relié pour la première fois au second composant (40), la tige (24) de l'élément de fixation (20), lors de la liaison des deux composants (50, 40), vient en prise derrière l'élément de blocage (30) avec une barrière (60) et, après une première libération des deux composants (50, 40), l'élément de blocage (30) est séparé du second composant (40) et reste sur la tige (24) de l'élément de fixation (20).

12. Procédé selon la revendication 11, **caractérisé en ce que** l'élément de blocage (30) est fixé au préalable au deuxième composant (40) par collage ou enfichage.
